# EUROPEAN PATENT APPLICATION

(11) **EP 1 482 409 A1**
(43) Date of publication of application: **01.12.2004**
(21) Application number: 04252298.7
(22) Date of filing: 19.04.2004
(51) Int. Cl.: G06F 9/445

(54) **User interface support apparatus and method**

(30) Priority: 17.04.2003 KR 2003024490
(71) Applicant: Samsung Electronics Co., Ltd., Suwon-si, Gyeonggi-do 442-742 (KR)
(72) Inventor: Yoon, Hyun-sik, 6-303 Woosung Villa, Seoul (KR); Yi, Kyoung-hoon, 105-2111 Woosung Apt., Seoul (KR)
(74) Representative: Robinson, Ian Michael

(57) **Abstract**

The user interface support system of the present invention includes a UI support module (100) provided in a household electric appliance, for supporting UIs through input/output modules depending on the conditions of respective users; and an external UI support module (200) provided in a web server or home server connected to the UI support module through a wired/wireless communication network, for managing the input/output modules depending on the conditions of the respective users transmitted through the UI support module and providing an input/output module requested by the UI support module.

## Description

The present invention relates to a user interface (UI) support system and method.

In recent years, as processing speeds of household electric appliances have become faster and their overall capacities have increased, many household electric appliances including electric rice cookers with built-in liquid crystal displays and digital televisions (hereinafter, referred to as 'DTV') provide information requested by users or information that users have to learn through the screens of the displays.

Such information is provided to a user through a user interface (hereinafter, referred to as 'UI') by which the input of the user is transferred to a system and then processed therein. Therefore, each household electric appliance is equipped with a module for processing the UI.

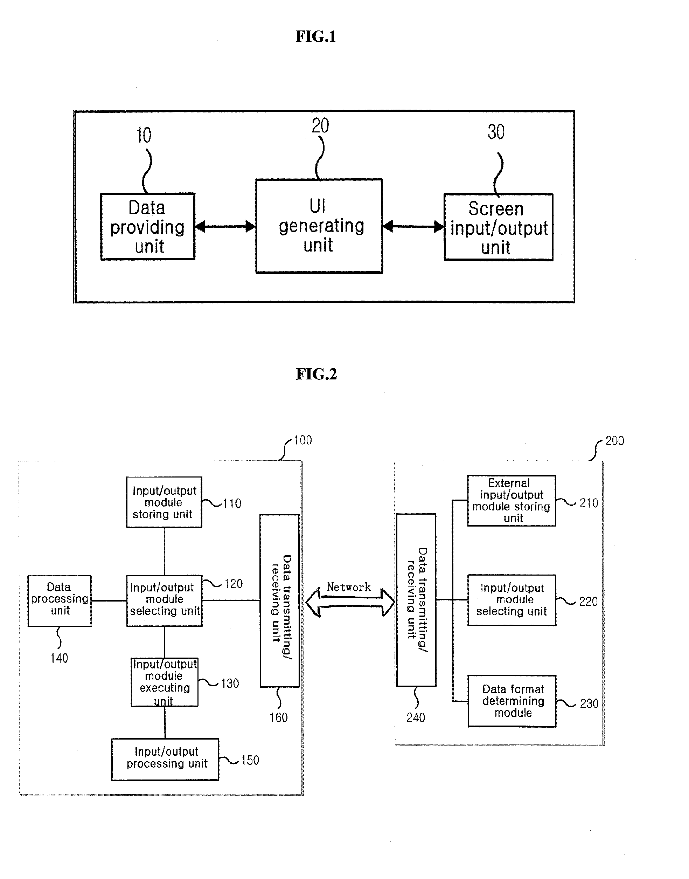

Figure 1 is a block diagram schematically illustrating a conventional UI processing configuration provided in a household electric appliance.

As shown in Figure 1, each household electric appliance includes a data providing unit 10 for transferring data necessary for generating UI, a UI generating unit 20 for generating the UI by using information transmitted from the data providing unit 10, and a screen input/output unit 30 for outputting the UI generated by the UI generating unit 20 onto a screen.

In this configuration, if information such as the input of a user, an event or the like occurs, relevant data are transmitted to the UI generating unit 20 via the data providing unit 10. Then, the UI generating unit 20 constructs a UI of the screen based on the data transmitted from the data providing unit 10 so that the UI can be output through the screen input/output unit 30.

Through this procedure, a UI depending on the input of the user or the event is constructed to allow output through the screen input/output unit 30. Such a UI processing configuration is constructed so that only one UI is used in one home appliance. For this reason, users had to use only a UI set in each home appliance.

Meanwhile, even in home appliances that support several UIs, UIs vary only by a direct selection of users. Accordingly, most users of the household electric appliances usually use only one UI.

Therefore, when household electric appliances are used by several users, it is necessary to provide UIs that meet users' preferences or are suitable for users' environments depending on respective users. However, existing appliances do not provide such a function.

For this reason, the users must expend time and effort in order to learn the UIs of household electric appliances whenever they have to use such household electric appliances. As functions provided through the household electric appliances increase, UIs gradually become more complicated. As a result, users do not attempt to learn newly added functions since they dislike learning about the functions of complicated UIs.

Accordingly, there are problems in that various functions that can be provided through respective household electric appliances are not efficiently used and added value cannot be created using UIs.

In other words, a TV supplied to a specific company or home provides the same UI. If it is possible to change the UI to be suitable for the company or home (e.g., company's logo is output on a UI screen of the TV supplied to the company, whereas weather forecast information is output on the UI screen of the TV supplied to the home), higher added value can be created.

According to the present invention there is provided an apparatus and method as set forth in the appended claims. Preferred features of the invention will be apparent from the dependent claims, and the description which follows.

An aspect of the present invention allows each user to use a UI meeting conditions selected by him/her irrespective of appliance or region, by setting the UI of each user depending on the user's condition.

Another aspect of the present invention allows a user to utilize new appliances or newly added functions without consuming large amounts of time and an effort in order to learn new UIs.

A further aspect of the present invention is to improve user's feelings of satisfaction and create various added value through user convenience that is provided by allowing the user to utilize a household electric appliance through a UI depending on the user's condition.

In the present invention, if a user selects an input/output module that generates a certain UI in order to use the UI, the selected input/output module is set to meet the user's condition. The user can thus be provided with a UI meeting the user's condition through the input/output module set according to the user.

Such an input/output module for providing a UI depending on user's condition is a program for generating a certain UI and processing input of the user. The input/output module may be stored in an input/output module storing unit of a UI support apparatus or an external input/output module storing unit (210) of an external server.

In the present invention, a user is defined as a person who intends to accomplish a specific object using the input/output module. The user's condition is provided directly or indirectly by the user in order to receive a specific UI and is defined for use in selecting the input/output module that generates a relevant UI. In an exemplary embodiment, the user's condition includes a preference of the user, a setting of the user, an information pertaining to the user, etc.

The present invention provides a user interface support system and method, wherein a user interface selected depending on a user's preference or environment is registered according to the condition of each user and an input/output module for creating each user interface is set so that the same user interface can be used irrespective of appliance and region through the input/output module set according to each user.

According to one aspect of the present invention, there is provided a user interface support apparatus comprising a UI support module for storing input/output modules, which are selected corresponding to the conditions of respective users by the plurality of users, in an input/output module storing unit, searching for an input/output module of each of the users in the input/output module storing unit to execute the input/output module, and supporting a UI meeting the condition of each of the users.

According to another aspect of the present invention, there is provided a user interface support apparatus comprising an external UI support module provided in a web server or a home server, for receiving and storing input/output modules corresponding to the conditions of respective users from a plurality of users, searching for an input/output module for each of the users requested through a household electric appliance to provide the searched input/output module to the household electric appliance, and supporting a UI meeting the condition of each of the users in the household electric appliance.

According to a further aspect of the present invention, there is provided a user interface support system comprising a UI support module provided in a household electric appliance, for supporting UIs through input/output modules depending on the conditions of respective users; and an external UI support module provided in a web server or home server connected to the UI support module through a wired/wireless communication network, for managing the input/output modules depending on the conditions of the respective users transmitted through the UI support module and providing an input/output module requested by the UI support module.

In an exemplary embodiment, the UI support module comprises an input/output module storing unit for storing and managing the input/output modules; an input/output module selecting unit for searching for an input/output module meeting the condition of each user in the input/output module storing unit to provide the searched input/output module; an input/output module executing unit for executing the input/output module selected by the input/output module selecting unit; a data processing unit for receiving and processing data necessary for generation and processing of a UI, said data being generated from an appliance that requests the input/output module; and an input/output processing unit for processing the UI processed in the input/output module executed through the input/output module executing unit so that the UI can be output on a screen.

In an exemplary embodiment, the external UI support module comprises an external input/output module storing unit for storing the input/output modules that provide relevant UIs depending on the conditions of the respective users; and an external input/output module selecting unit for searching for an input/output module corresponding to a specific condition of each of the users requested by a given appliance in the input/output module storing unit and providing the searched input/output module to the appliance.

According to a still further aspect of the present invention, there is provided a user interface support method, comprising the input/output module registering step of receiving input/output modules meeting the conditions of respective users from the users and registering the received input/output modules in an input/output module selecting unit of a UI support module; the input/output module providing step of, if a specific input/output module of a user is requested through the UI support module, searching for and providing the relevant input/output module; and the UI support step for executing the provided input/output module and supporting a UI meeting the condition of the user through the input/output module.

According to a still further aspect of the present invention, there is provided a user interface support method, comprising the steps of, if an input/output module corresponding to a specific condition ID is requested by a UI support module provided in a household electric appliance, searching for the input/output module corresponding to the condition ID through an external input/output module storing unit; and if the input/output module corresponding to the condition ID is searched for, providing, by the external input/output module selecting unit, the searched input/output module to the UI support module of the household electric appliance.

According to a still further aspect of the present invention, there is provided a user interface support method, comprising the steps of receiving input/output modules meeting the conditions of respective users from the users and registering the received input/output modules in an input/output module selecting unit of a UI support module; if an input/output module of a user is requested through the UI support module, determining whether the relevant input/output module is present in an input/output module storing unit; and if it is determined that the relevant input/output module is present in the input/output module storing unit, providing a UI meeting the condition of the user through the relevant input/output module, or if it is determined that the relevant input/output module is not present in the input/output module storing unit, requesting an external input/output module storing unit provided in an external server at a remote place to transmit the relevant input/output module and providing the UI meeting the condition the user through the transmitted input/output module.

For a better understanding of the invention, and to show how embodiments of the same may be carried into effect, reference will now be made, by way of example, to the accompanying diagrammatic drawings in which:
Figure 1 is a block diagram schematically illustrating a conventional UI processing configuration provided in a household electric appliance;
Figure 2 is a block diagram schematically illustrating the configuration of a UI support system according to an embodiment of the present invention;
Figure 3 is a block diagram schematically illustrating the configuration of an input/output module according to an embodiment of the present invention;
Figure 4 is a block diagram schematically illustrating the configurations of an external input/output module selecting unit and an external input/output module storing unit according to an embodiment of the present invention;
Figure 5 schematically shows the configuration of a data format determining unit according to an embodiment of the present invention;
Figure 6 is a flowchart schematically illustrating the process of selecting an input/output module according to an embodiment of the present invention;
Figure 7 is a flowchart schematically illustrating a UI support process according to an embodiment of the present invention;
Figures 8a to 8d show output screens of a DTV according to an embodiment of the present invention; and
Figure 9 illustrates the process of providing electronic program guide (EPG) information according to an embodiment of the present invention.

Hereinafter, a UI support system and method of the present invention will be described in detail with reference to the accompanying drawings.

In specifically explaining the configuration and operation of the UI support system according to a preferred embodiment of the present invention, it is assumed that a user authentication process required for providing a UI meeting the user's condition through an input/output module set according to each user is performed through a predetermined user authentication mechanism provided in each device.

Further, for more detailed description of the preferred embodiment, the present invention will described as being implemented through a UI support system provided to a user utilizing a household electric appliance corresponding to a representative example of a UI environment. However, this is only illustrative and it will be understood by those skilled in the art that various modifications, changes and equivalents may be made to the present invention to obtain modules which can provide UIs meeting the conditions provided directly or indirectly by the subjects who intend to accomplish specific objects by using input/output modules, including companies supplied with household electric appliances, companies providing household electric appliances and companies providing services using the appliances as well as users of household electric appliances.

Figure 2 is a block diagram schematically illustrating the configuration of a UI support system according to an embodiment of the present invention.

As shown in Figure 2, the UI support system generally comprises a UI support module 100 provided inside a household electric appliance, for supporting UIs through input/output modules depending on conditions of respective users, and an external UI support module 200 provided in an external server or a home server connected to the UI support module 100 via a wired/wireless communication network, for managing input/output modules depending on the conditions of the respective users transmitted through the UI support module 100 and providing an input/output module requested by the UI support module 100.

The UI support module 100 includes an input/output module storing unit 110 for actually storing and managing input/output modules, an input/output module selecting unit 120 for searching for an input/output module meeting the condition of a user through the input/output module storing unit 110 and then providing the searched input/output module, an input/output module executing unit 130 for executing the input/output module selected by the input/output module selecting unit 120, a data processing unit 140 for receiving and processing data necessary for generating and processing a UI, an input/output processing unit 150 for outputting the UI processed in the input/output module on a screen or transmitting it to other devices with a screen, and a data transmitting/receiving unit 160 for requesting the external UI support module 200 to transmit an input/output module that was not stored in the input/output module storing unit 110 if the input/output module is requested.

The external UI support module 200 includes an external input/output module storing unit 210 for actually storing and managing input/output modules, an input/output module selecting unit 220 for searching for an input/output module meeting the condition of a user requested by the input/output module selecting unit 120 of the UI support module 100 and then providing the searched input/output module, a data format determining module 230 for determining whether the provided input/output module can process the type of data of the UI support module 100, and a data transmitting/receiving unit 240 for providing the searched input/output module in response to the request for the input/output module transmitted from the UI support module 100.

The data format determining module 230 provided in the external UI support module 200 may be provided in the UI support module 100.

The input/output module for supporting UIs depending on the conditions of respective users through the UI support module 100 and the external UI support module 200 is a program for generating a certain UI and processing the input of each user. For example, XSLT (Extensible Stylesheet Language Transformation) for generating and processing a document in an XML (Extensible Markup Language) format is set as an input/output module for an UI of the XML type.

Further, a JAVA program, Shockwave Flash Format (SWF), a .NET program and the like may be used as input/output modules for processing predetermined UIs, respectively.

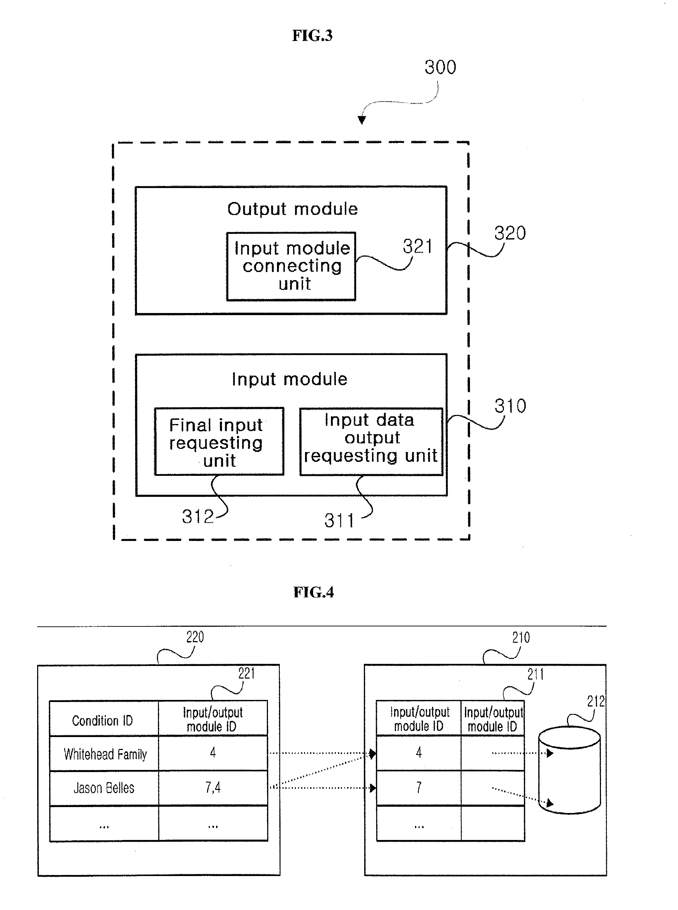

Figure 3 is a block diagram schematically illustrating the configuration of an input/output module 300 according to an embodiment of the present invention.

As shown in Figure 3, the input/output module 300 may be implemented using a single module into which an input module 310 and an output module 320 are physically combined, or two modules of the input module 310 and the output module 320 that are physically separated from each other.

If the input/output module 300 consists of the input module 310 and the output module 320 that are physically separated from each other, the input/output module storing unit 110 and the external input/output module storing unit 210 can separately store the input module and the output module. In this case, the input/output module selecting unit 120 and the external input/output module selecting unit 220 select a specific input module 310 or a specific output module 320 depending on a specific condition. The output module 320 selected depending on the condition and the input module 310 interlocked with the output module 320 are selected as logically one unit to be used for input and output.

The input module 310 is to process data input by a user. This module 310 includes an input data output requesting unit 311 for processing data input by the user through a bound output module if the user requests that the input data be output on one screen, and a final input requesting unit 312 for processing the data through the bound output module if the user requests that the data be transferred to the next screen.

The output module 320 is to process the output of data transmitted from the input module 310. The output module 320 includes an input module connecting unit 321 for indicating which one of the input data output requesting unit 311 and the final input requesting unit 312 functions as the input module 310 interlocked with the output module 320 so that the output module 320 and the input module 310 can be interlocked with each other.

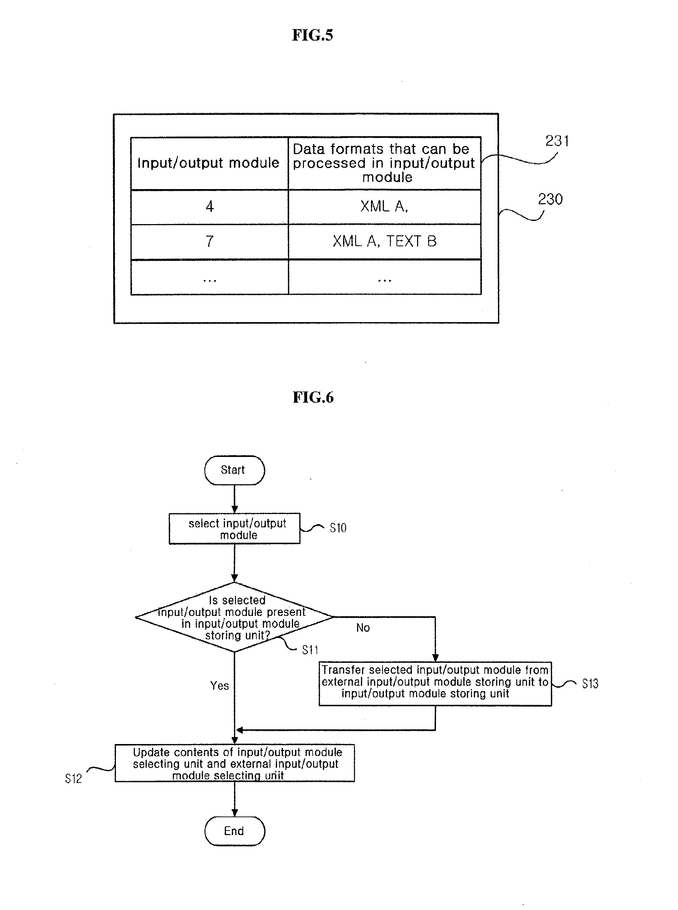

Figure 4 is a block diagram schematically illustrating the configurations of an external input/output module selecting unit 210 and an external input/output module storing unit 220 according to an embodiment of the present invention.

The input/output module storing unit 110 and the input/output module selecting unit 120 of the UI support module 100 have the same configurations as the external input/output module storing unit 210 and the external input/output module selecting unit 220, respectively. Therefore, the configurations of the input/output module storing unit 110 and the input/output module select unit 120 are not shown in the drawings.

The external input/output module storing unit 210 is to manage the input/output module 300, and includes a table 211 where storage areas of input/output module IDs and pointers indicating actual input/output modules 300 are mapped, and a database 212 in which the actual input/output modules are stored.

The external input/output module selecting unit 220 is to search for an input/output module 300 meeting user's condition in the input/output module storing unit 210 to provide the relevant input/output module. The external input/output module selecting unit 220 includes a table 221 where condition IDs and the input/output module IDs are mapped in order to confirm the input/output module depending on a user's condition.

The mapping table 211 of the external input/output module storing unit 210 and the mapping table 221 of the external input/output module selecting unit 220 are logically connected to each other, so that it is possible to search for an input/output module set depending on a condition ID.

For example, if an input/output module corresponding to a condition ID of Jason Belles is requested to the external input/output module selecting unit 220 by the UI support module 100, the external input/output module selecting unit 220 searches for an input/output module ID corresponding to the condition ID of Jason Belles through the mapping table 211 and detects an input/output module corresponding to '7,4' that is the input/output module ID searched through the mapping table 211 of the input/output module storing unit 210. The detected input/output module is provided to the input/output module selecting unit 120.

Figure 5 schematically shows the configuration of a data format determining unit 230 according to an embodiment of the present invention.

As shown in Figure 5, the data format determining module 230 includes a table 231 where input/output modules and data formats that can be processed through the respective input/output modules are mapped.

In this embodiment, if a condition ID of Jason Belles is set such that an input/output module with an input/output module ID of 7 is first used and an input/output module with an input/output module ID of 4 is then used when the input/output module with the input/output module ID of 7 is not available, the external input/output module selecting unit 220 determines whether a data format of a device with the UI support module 100 can be processed through the selected input/output module by using the data format determining unit 230, and then selects the input/output module ID of 7 or 4 so as to transmit the selected input/output module to the UI support module 100.

In other words, for example, in a case where the input/output module with the input/output module ID of 4 can process data input in the XML format using a schema called "A" and the input/output module with the input/output module ID of 7 can process data input in the XML format using a schema called "A" and text in a format called "B," if a data format used by the UI support module 100 is text in the format called "B," the data format determining module 230 selects the input/output module ID of 7 and transmits an input/output module corresponding thereto to the UI support module 100.

For reference, in the UI support module and system according to the embodiments of the present invention, all the modules may be constructed of hardware or software, or some of the modules may be constructed of software.

Therefore, the construction of the UI support module and system according to the embodiments of the present invention by using hardware or software falls within the spirit and scope of the invention, and it will be apparent that modifications and changes involved with the construction thereof using hardware and/or software may be added thereto without departing from the spirit and scope of the invention.

Hereinafter, a UI support method for supporting a UI depending on user's condition by using the UI support system constructed as such will be described in detail in connection with one embodiment with reference to the accompanying drawings.

Figure 6 is a flowchart schematically illustrating the process of registering an input/output module according to an embodiment of the present invention.

As shown in Figure 6, the process of registering the input/output module generally includes the step of selecting the input/output module, the step of storing the selected input/output module and the step of writing information on the selected input/output module in the input/output module selecting unit 120 and the external input/output module selecting unit 220.

First, the user selects an input/output module 300 corresponding to a UI that a user wants to use in the future according to his/her own preference.

Further, in case of a household electric appliance, the appliance itself selects a relevant input/output module 300 to support a specific UI (S10).

This process of selecting the input/output module may be attempted in various cases such as a request by a user and initialization of the household electric appliance.

Then, it is determined whether the selected input/output module is present in the input/output module storing unit 110 of the UI support module 100 (S11).

If it is determined that a relevant input/output module is present in the input/output module storing unit 110, a condition ID as well as the selected input/output module are written in the input/output module selecting unit 120 and the external input/output module selecting unit 220 (S12).

On the contrary, if it is determined that the relevant input/output module is not present in the input/output module storing unit 110, the relevant input/output module is requested by transmitting the condition ID obtained through a user authentication process to the external input/output module selecting unit 220 of the external UI support module 200.

The external input/output module selecting unit 220 that has received the condition ID searches for the relevant input/output module 300 through the external input/output module storing unit 210 and then transmits the searched input/output module 300 to the UI support module 100 (S13).

The UI support module 100 receives the input/output module 300 and stores it in the input/output module storing unit 110, and writes the condition ID as well as the selected input/output module 300 in the input/output module selecting unit 120 and the external input/output module selecting unit 220 (S12). If the selected input/output module is not present in the external input/output module storing unit 210, storing a supplied input/output module in the external input/output module storing unit 210, and writing the condition ID of the user and the information on the supplied input/output module in the external input/output selecting unit 220.

Through the aforementioned process, the input/output module selected by the user or the household electric appliance is written in the input/output module selecting unit 120 and the external input/output module selecting unit 220 along with the condition ID assigned to the user or household electric appliance. Thus, a UI corresponding to each user is supported through the UI support module 100.

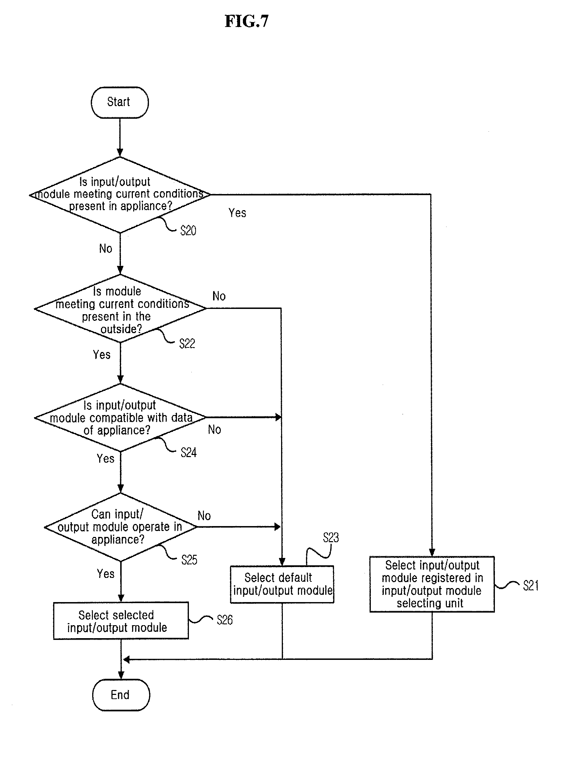

Figure 7 is a flowchart schematically illustrating a UI support process according to an embodiment of the present invention.

As shown in Figure 7, the UI support module 100 first determines whether an input/output module meeting a given current condition (e.g., a condition ID of a specific user, or a condition ID of a company equipped with a household electric appliance) is present in the household electric appliance (S20).

In response thereto, the input/output module selecting unit 120 checks whether a relevant condition ID is stored by referring to the mapping table 121 and determines whether there is an input/output module meeting the current condition.

If it is determined that the relevant input/output module is present, an input/output module ID mapped to the condition ID is detected. Further, the relevant input/output module is detected from the input/output module storing unit 110 by using the detected input/output module ID and then executed. Thus, a UI meeting the current condition is supported (S21).

Meanwhile, if it is determined that the relevant input/output module is not present, it is determined whether the input/output module meeting the current condition is present elsewhere through the external input/output module selecting unit 220 of the external UI support module 200 (S22). If it is determined that the relevant input/output module is not present elsewhere, an input/output module that is given as default in the household electric appliance is selected to support the UI (S23).

Meanwhile, if it is determined that the relevant input/output module is present, it is confirmed as to whether internal data created to generate the UI in the household electric appliance through the data format determining module 230 can be executed in the selected input/output module and it is determined whether the input/output module can be compatible with data of the current household electric appliance (S24).

If it is determined that the input/output module is not compatible with the data, a default input/output module is selected to support the UI (S23).

If it is determined that the input/output module is compatible with the data, it is determined whether the household electric appliance that requires the searched input/output module can execute the input/output module (S25).

For example, the input/output module 300 is a JAVA bytecode. If an input/output module executing unit of the household electric appliance is based on a SWF execution environment, the input/output module cannot be executed.

If it is determined that the input/output module cannot be executed, the default input/output module is selected (S23). On the contrary, if it is determined that the input/output module can be executed, the selected input/output module 300 is used (S26).

Through the aforementioned process, the user or the household electric appliance causes a UI selected by the user or appliance to be output onto a screen of its own display unit or external remote device.

In this process, although there is already an input/output module 300 meeting the current condition in the external input/output module selecting unit 220 in the process of determining whether the input/output module 300 meeting the current condition is present elsewhere (S22), it is possible to change the output module depending on the rule or policy of the external input/output module selecting unit 220.

For example, in a case where the existing input/output module is to be replaced with an upgraded input/output module, when the external input/output module selecting unit 220 is requested to transmit an input/output module 300 corresponding to a given condition ID, the previous input/output module is replaced with a new input/output module which in turn is provided.

The UI support process according to the present invention constructed as such will be described in connection with an exemplary embodiment with reference to the accompanying drawings.

Figures 8a to 8d show output screens of a DTV according to an embodiment of the present invention.

For example, if a user of the DTV wants to use a UI shown in Figure 8a according to his/her own preference, the user selects an input/output module corresponding to the UI to be used.

The input/output module selecting unit 120 of the UI support module 100 provided in the DTV depending on the user's selection of the input/output module registers an input/output module ID corresponding to the selected input/output module 300 along with the condition ID of the user, and provides a relevant UI through an input/output module set whenever the user gains access thereto.

As shown in Figure 8a, if the user has set a UI that provides information on his/her own name and a screen currently being output, data in the XML format for screen control can be established as follows:
<input>
<title name="screen control"/>
<item name="contrast" value="50" selected="true"/>
<item name="color control" value="45" selected="false"/>
</input>

Codes of the input/output module for processing the data in the XML format for such screen control through the input/output module selected by the user and then outputting the processed data on the screen can be established as follows:
if element="input" then
print the name attribute of <input>/<title>
draw empty table with 2 columns and 3 rows
fill row 0 and column 1 with "current value"
fill row 1 and column 0 with the "name" attribute of first <item> of <input>
fill row 1 and column 1 with the "value" attribute of first <item> of <input>
fill row 2 and column 0 with the "name" attribute of second <item> of <input>
fill row 2 and column 1 with the "value" attribute of second <item> of <input>
if the "selected" attribute of first <item> of <input> == true then make row 1 highlighted
else if the "selected" attribute of second <item> of <input> == true then make row 2 highlighted
print getCurrentUser() + "Mr/Mrs,"+ newline() + "This is a screen control menu."
end

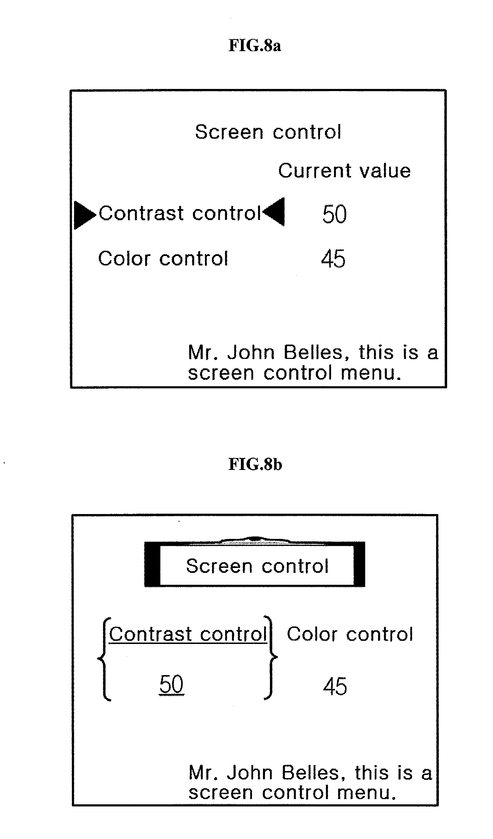

Further, in case of Figure 8b, data in the XML format for screen control can be similarly established through slight code modification in order to represent the data as shown in Figure 8b.

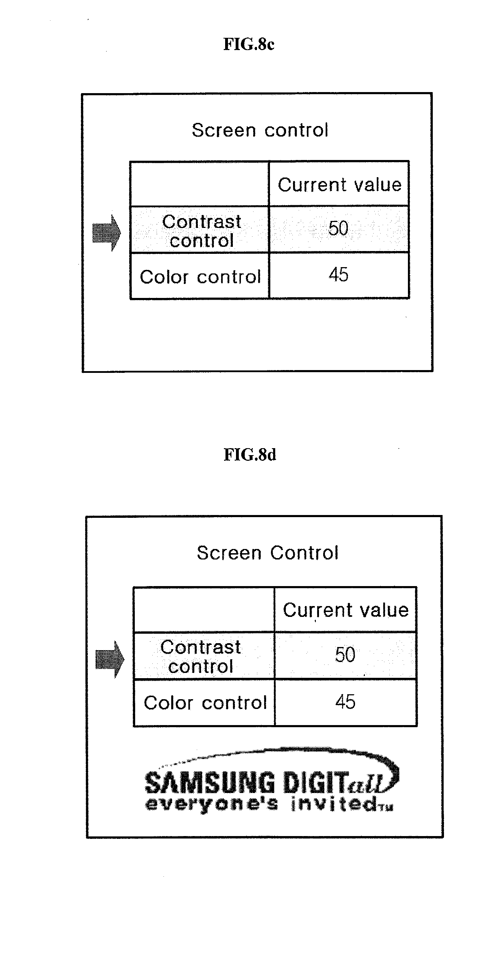

In addition, as shown in Figure 8c, weather information may be set as a user's condition in the output module so as to provide weather information through the UI screen. Further, as shown in Figure 8d, a company's logo may be set as a user's condition in the output module so as to provide the company's logo through the UI screen.

Furthermore, the same input text can be provided through a UI changed depending on a user's preference, by means of various modifications of the output module.

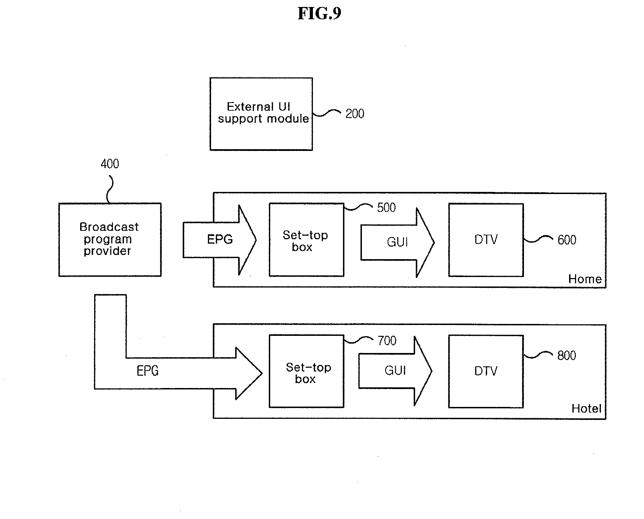

Figure 9 illustrates the process of providing electronic program guide (EPG) information according to an embodiment of the present invention.

As shown in Figure 9, if a user views TV at home through a UI that he/she likes, the UI that the user is viewing is a UI that is generated by processing EPG information provided from a broadcast program provider 400 using the input/output module 300 selected by the user via the UI support module 100 provided in a set-top box 500 and then is output to the screen of a DTV 600.

If this user stays at a hotel for the first time, the input/output module selecting unit 120 of the UI support module 100 contained in a set-top box 700 is provided with an input/output module meeting a condition ID of the user from the external UI support module 200 depending on the condition of information on the user and the broadcast program provider.

Further, the EPG information provided by the broadcast program provider 400 is processed by the input/output module through the UI support module 100 that operates in the set-top box 700, so that it is provided as a UI meeting the conditions of the user.

At this time, the UI provided through a DTV 800 in the hotel is the same as seen on the DTV 600 at home.

In such a way, the user can select an input/output module by which a UI can be generated according to his/her own preference, and store it in an input/output module selecting unit and an input/output module storing unit, based on his/her condition ID and the input/output module. Therefore, in a case where a TV is turned off and then will be turned on again after several days, or another TV disposed at a different place is turned on, the user can watch TV through the same UI using the input/output module set in his/her condition ID after automatic or manual authentication of the user.

According to the present invention, a user can more conveniently utilize household electric appliances through a UI meeting his/her own preference irrespective of region or appliance.

Further, according to the present invention, there is an advantage in that various UIs are provided by changing conditions depending on respective use environments in a specific appliance, resulting in user's satisfaction and creation of higher added value.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A user interface (UI) support apparatus, comprising:
a UI support module (100) operable to store input/output modules as stored input/output modules, wherein the stored input/output modules are selected corresponding to conditions of respective users, in an input/output module storing unit (110), operable to search the input/output module storing unit (110) for a specific input/output module of one of the respective users, operable to execute the specific input/output module, and operable to support a UI meeting a condition of the one of the respective users.

2. The apparatus as claimed in claim 1, wherein the UI support module (100) comprises:
said input/output module storing unit (110) storing and managing the input/output module;
an input/output module selecting unit (120) for searching for the specific input/output module meeting the condition of the one of the respective users in the input/output module storing unit (110) to provide a searched input/output module;
an input/output module executing unit (130) for executing the searched input/output module searched for by the input/output module selecting unit (120); and
an input/output processing unit (150) for processing the UI processed in the searched input/output module executed at the input/output module executing unit (130) to output the UI on a first screen.

3. The apparatus as claimed in claim 2, wherein the UI support module (100) further comprises a data processing unit (140) for receiving and processing data necessary for generation and processing of the UI, said data being generated from an appliance that requests the specific input/output module.

4. The apparatus as claimed in claim 2 or 3, wherein the UI support module (100) further comprises a data format determining unit for determining whether the searched input/output module provided by the input/output module selecting unit (120) can process a type of data of the UI support module (100), through a table where the input/output modules and data formats that can be processed in respective input/output modules of the table are mapped.

5. The apparatus as claimed in claim 2, 3 or 4, wherein the input/output module storing unit (110) comprises a mapping table comprising storage areas of input/output module IDs and the stored input/output modules.

6. The apparatus as claimed in any of claims 2 to 5, wherein the input/output module selecting unit (120) comprises a mapping table comprising condition IDs and input/output module IDs.

7. The apparatus as claimed in any of claims 2 to 6, wherein the input/output processing unit (150) transmits the UI to a remote device with a second screen.

8. A user interface (UI) support apparatus, comprising:
an external UI support module (200) provided in a web server or a home server, operable to receive and store input/output modules corresponding to conditions of respective users, operable to search for a specific input/output module for one of the respective users requested through a household appliance and to provide a searched input/output module to the household appliance, and operable to support a UI meeting a condition of the one of the respective users in the household appliance.

9. The user interface (UI) support apparatus as claimed in claim 8, wherein the external UI support module (200) comprises:
an external input/output module storing unit (210) for storing the input/output modules that provide relevant UIs depending on the conditions of the respective user; and
an external input/output module selecting unit (220) for searching the external input/output module storing unit (210) for the specific input/output module corresponding to the condition of the one of the respective users requested by the household appliance and providing the searched input/output module to the household appliance.

10. The apparatus as claimed in claim 8 or 9, wherein the external UI support module (200) further comprises a data format determining unit (230) for determining whether the searched input/output module provided by the external input/output module selecting unit (220) can process a type of data of the external UI support module (200), through a table where the input/output modules and data formats that can be processed in respective input/output modules of the table are mapped.

11. The apparatus as claimed in claim 10, wherein the external input/output module storing unit (210) comprises a mapping table comprising storage areas of input/output module IDs and the stored input/output modules.

12. The user interface support apparatus as claimed in claim 10 or 11, wherein the external input/output module selecting unit (220) comprises a mapping table comprising condition IDs and input/output module IDs.

13. A user interface (UI) support system, comprising:
an internal UI support module (100) provided in a household appliance, for supporting UIs through input/output modules depending on conditions of respective user; and
an external UI support module (200) provided in a web server or a home server connected to the internal UI support module (100) through a wired and/or wireless communication network, for managing the input/output modules depending on the conditions of the respective users transmitted through the internal UI support module (100) and providing a specific input/output module requested by the internal UI support module (100).

14. The system as claimed in claim 13, wherein the internal UI support module (100) comprises:
an input/output module storing unit (110) for storing and managing the input/output modules;
an input/output module selecting unit (120) for searching the input/output module storing unit (110) for the specific internal input/output module meeting a condition of one of the respective users to provide the searched input/output module;
an input/output module executing unit (130) for executing the searched input/output module searched for by the input/output module selecting unit (120);
a data processing unit (140) for receiving and processing data necessary for generation and processing of the UI, said data being generated from the household appliance that requests the input/output module; and
an input/output processing unit (150) for processing the UI processed in the searched input/output module executed at the input/output module executing unit (130) to output the UI on a first screen.

15. The system as claimed in claim 14, wherein the input/output module storing unit (110) comprises a mapping table comprising storage areas of input/output module IDs and the input/output module.

16. The system as claimed in claim 14 or 15, wherein the input/output module selecting unit (120) includes a mapping table comprising condition IDs and input/output module IDs.

17. The system as claimed in claim 14, 15 or 16, wherein the input/output processing unit (150) transmits the UI to a remote device with a second screen.

18. The system as claimed in any of claims 13 to 17, wherein the external UI support module (200) comprises:
an external input/output module storing unit (210) for storing the input/output modules that provide relevant UIs depending on the conditions of the respective users; and
an external input/output module selecting unit (220) for searching the external input/output module storing unit (210) for the specific input/output module corresponding to the condition of the one of the respective users requested by the household appliance, to generate a searched input/output module and providing the searched input/output module to the household appliance.

19. The system as claimed in claim 18, the external UI support module (200) further comprises a data format determining unit (230) for determining whether the searched input/output module provided by the external input/output module selecting unit (220) can process a type of data of the external UI support module (200), through a table where the input/output modules and data formats that can be processed in respective input/output modules of the table are mapped.

20. The system as claimed in claim 18 or 19, wherein the external input/output module storing unit (210) comprises a mapping table comprising storage areas of input/output module IDs and input/output modules.

21. The system as claimed in claim 18, 19 or 20, wherein the external input/output module selecting unit (220) comprises a mapping table comprising condition IDs and input/output module IDs.

22. A user interface (UI) support method, comprising:
an input/output module registering operation of receiving input/output modules meeting conditions of respective users as received input/output modules and registering the received input/output modules in an internal input/output module selecting unit of an internal UI support module;
an input/output module providing operation of, if a first specific input/output module of one of the respective users is requested through the internal UI support module (100), searching for and providing the first specific input/output module as a provided input/output module; and
a UI support operation for executing the provided input/output module and supporting a UI meeting the condition of the one of the respective users through the provided input/output module.

23. The method as claimed in claim 22, wherein the input/output module registering operation comprises:
selecting a second specific input/output module for generating a UI to be used in the future by the one of the respective users, as a selected input/output module;
determining whether the selected input/output module is present in an internal input/output module storing unit of the internal UI support module (100);
if the selected input/output module is present, writing a condition ID of the one of the respective users and information on the selected input/output module in the internal input/output module selecting unit; and
if the selected input/output module is not present, requesting the selected input/output module through an external UI support module (200), determining whether the selected input/output module is present in an external input/output module storing unit (210) of the external UI support module (200), and if the selected input/output module is present, writing the condition ID of the one of the respective users and the information on the selected input/output module in the internal input/output module selecting unit.

24. The method as claimed in claim 23, wherein the writing step comprises the step of writing the condition ID of the user and the information on the selected input/output module in an external input/output module selecting unit (220).

25. The method as claimed in claim 23 or 24, wherein if the selected input/output module is not present, storing a supplied input/output module in the external input/output module storing unit (210), and writing the condition ID of the one of the respective users and the information on the supplied input/output module in the internal and external input/output selecting unit.

26. The method as claimed in any of claims 22 to 26, wherein the input/output module providing operation comprises:
receiving a condition ID from the one of the respective users and determining whether the condition ID has been registered through the internal input/output module selecting unit;
if the condition ID has been registered, selecting the first specific input/output module according to the condition ID and providing the UI meeting the condition of the one of the respective users; and
if the condition ID has not been registered, requesting an external UI support module (200) to transmit the first specific input/output module according to the condition ID and providing the UI meeting the condition of the one of the respective users through the input/output module provided by the external UI support module (200).

27. The method as claimed in claim 26, wherein the operation of providing the UI meeting the condition of the one of the respective users through the input/output module provided by the external UI support module (200) comprises:
determining whether the first specific input/output module corresponding to the condition ID is present by an external input/output module selecting unit (220) of the external UI support module (200);
if it is determined that the first specific input/output module corresponding to the condition ID is not present, providing the UI through a default input/output module; and
if it is determined that the first specific input/output module corresponding to the condition ID is present, determining, by a data format determining unit (230), whether the first specific input/output module is compatible with an appliance requesting the first specific input/output module, and providing the UI through the default input/output module if it is determined that the first specific input/output module is not compatible with the appliance, or providing the UI through the first specific input/output module if it is determined that the input/output module is compatible with the appliance.

28. A user interface support method, comprising:
if an input/output module corresponding to a specific condition ID is requested by a UI support module provided in a household electric appliance, searching for the input/output module corresponding to the condition ID through an external input/output module storing unit (210); and
if the input/output module corresponding to the condition ID is found as a searched input/output module, providing, by an external input/output module selecting unit (220), the searched input/output module to the UI support module of the household appliance.

29. The method as claimed in claim 28, wherein the operation of providing the searched input/output module comprises determining, by a data format determining unit (230), whether the searched input/output module is compatible with the household appliance, and providing a default input/output module if the searched input/output module is not compatible with the household appliance, or providing the searched input/output module if the searched input/output module is compatible with the household appliance.

30. A user interface (UI) support method, comprising:
receiving input/output modules meeting conditions of respective users as received input/output modules and registering the received input/output modules in an input/output module selecting unit of an internal UI support module (100);
if a specific input/output module of one of the respective users is requested through the internal UI support module (100), determining whether the input/output module is present in an input/output module storing unit; and
if the specific input/output module is present in the input/output module storing unit, providing a UI meeting the condition of the one of the respective users through the specific input/output module, or if the specific input/output module is not present in the input/output module storing unit, requesting an external input/output module storing unit (210) provided in an external server at a remote place to transmit the specific input/output module as a transmitted input/output module and providing the UI meeting the condition of the one of the respective users through the transmitted input/output module.

31. The method as claimed in claim 30, wherein the input/output module registering operation comprises:
selecting the specific input/output module for generating the UI to be used in the future by the one of the respective users, as a selected input/output module;
determining whether the selected input/output module is present in the input/output module storing unit of the internal UI support module (100);
if the selected input/output module is present, writing a condition ID of the one of the respective users and information on the selected input/output module in the input/output module selecting unit; and
if the selected input/output module is not present, requesting the selected input/output module through an external UI support module (200), determining whether the selected input/output module is present in an input/output module storing unit of the external UI support module (200), and if the selected input/output module is present, writing the condition ID of the one of the respective users and the information on the selected input/output module in the internal input/output module selecting unit.

32. The method as claimed in claim 31, wherein the writing step comprises the step of writing the condition ID of the user and the information on the selected input/output module in an external input/output module selecting unit (220).

33. The method as claimed in any of claims 28 to 32, wherein the operation of providing the UI comprises determining, by a data format determining unit (230), whether specific input/output module is compatible with the internal UI support module (100), and providing the UI through a default input/output module if the specific input/output module is not compatible with the internal UI support module (100), or providing the UI through the specific input/output module if the specific input/output module is compatible with the internal UI support module (100).

34. The method as claimed in any of claims 31 to 33, wherein if the selected input/output module is not present, storing a supplied input/output module in the external input/output module storing unit (210), and writing the condition ID of the one of the respective users and the information on the supplied input/output module in the internal and external input/output selecting unit.
